# Europäisches Patentamt
# European Patent Office
# Office européen des brevets

(19)

(11) Veröffentlichungsnummer: **0 159 354 B1**

---

(12) ## EUROPÄISCHE PATENTSCHRIFT

(45) Veröffentlichungstag der Patentschrift:
01.04.87

(51) Int. Cl.⁴: **G 01 B 11/00**

(21) Anmeldenummer: **84903887.2**

(22) Anmeldetag: **12.10.84**

(86) Internationale Anmeldenummer:
**PCT/EP 84/00317**

(87) Internationale Veröffentlichungsnummer:
**WO 85/01793 (25.04.85 Gazette 85/10)**

---

(54) **VERFAHREN UND VORRICHTUNG ZUR MEHRDIMENSIONALEN VERMESSUNG EINES OBJEKTES.**

---

**Verbunden mit 84112330.0/0137517 (europäische Anmeldenummer/Veröffentlichungsnummer) durch Entscheidung vom 18.09.86.**

(30) Priorität: **13.10.83 DE 3337251**

(43) Veröffentlichungstag der Anmeldung:
**30.10.85 Patentblatt 85/44**

(45) Bekanntmachung des Hinweises auf die Patenterteilung:
**01.04.87 Patentblatt 87/14**

(84) Benannte Vertragsstaaten:
**AT CH DE FR GB IT LI NL SE**

(56) Entgegenhaltungen:
**DE - A - 3 134 303**
**DE - A - 3 309 584**

(73) Patentinhaber: **Häusler, Gerd, Dr., Alterlanger Strasse 33, D-8520 Erlangen (DE)**
Patentinhaber: **Maul, Manfred, Haagstrasse 19, D-8520 Erlangen (DE)**

(72) Erfinder: **Häusler, Gerd, Dr., Alterlanger Strasse 33, D-8520 Erlangen (DE)**
Erfinder: **Maul, Manfred, Haagstrasse 19, D-8520 Erlangen (DE)**

(74) Vertreter: **Weber, Otto Ernst, Dipl.-Phys., Hofbrunnstrasse 36, D-8000 München 71 (DE)**

---

ACTORUM AG

## Beschreibung

Die Erfindung betrifft ein Verfahren zur mehrdimensionalen Vermessung eines Objektes gemäss Oberbegriff des Anspruches 1 und eine Vorrichtung zur mehrdimensionalen Vermessung eines Objektes gemäss Oberbegriff des Anspruches 7.

Insbesondere betrifft die Erfindung ein Verfahren und eine Vorrichtung zur zweidimensionalen Vermessung eines Objektes, wobei durch eine Verschiebung des Objektes in der dritten Koordinatenrichtung oder durch die Vermessung des Objektes mittels des Verfahrens und der Vorrichtung auch in der dritten Koordinatenrichtung und parallel dazu, das Objekt dreidimensional vermessen werden kann.

Bekannte Verfahren dieser Art beruhen auf der Triangulationsmethode, bei der z.B. das Objekt optisch vermessen werden kann, indem ein schmales Lichtbündel oder eine Linie auf das Objekt projiziert wird und die Position des Beleuchtungslichtfleckes oder der Beleuchtungslinie auf dem zu vermessenden Objekt mit Hilfe einer Empfängereinrichtung bestimmt wird. Zur Bestimmung der räumlichen Lage des Beleuchtungslichtfleckes auf dem Objekt wird dabei die Beleuchtungsrichtung, also die Richtung der Achse des Beleuchtungslichtbündels, und der Ausgangspunkt des Beleuchtungslichtbündels mitberücksichtigt. Obwohl das Verfahren und die Vorrichtung nachstehend als optische Verfahren und Vorrichtung unter Bezugnahme auf eine weitgehende kohärente Strahlung eines Lichtbündels beschrieben wird, stellt dies keine Einschränkung des Verfahrens und der Vorrichtung dar. Vielmehr ist das Prinzip des Verfahrens und der Vorrichtung auch auf andere Strahlungsarten, z.B. eine Elektronenstrahlung, übertragbar.

Im Stande der Technik sind mehrere Verfahren bekannt, die im folgenden nach der zunehmenden Anzahl von Empfängerelementen bzw. Auflösungszellen der Empfängereinrichtung und gleichzeitig nach zunehmender Schnelligkeit der Vermessung geordnet sind.

Bei einem ersten Verfahren wird der Messkopf der Form des zu vermessenden Objektes punktweise in den drei Dimensionen x, y und z nachgeführt. Die optische Empfängereinrichtung dient nur dazu, einen konstanten Abstand zwischen dem Messkopf und der Fläche des zu vermessenden Objektes einzustellen (vergleiche dazu «Technische Anwendungen des Lasers», Herausgeber D. Rosenberger, Springer Verlag 1975, Seite 60). Bei diesem ersten Verfahren wird aus dem jeweiligen Ort des Messkopfes die Form des Objektes abgeleitet, wobei im Prinzip nur ein einzelnes Empfängerelement benötigt wird.

Ebenfalls aus Rosenberger (vergleiche a.a.O., Seite 62) ist ein zweites Verfahren bekannt. Bei diesem zweiten Verfahren wird der Messkopf in zwei Koordinaten x, y über das Objekt bewegt und die Höheninformation z aus der Lage des Bildpunktes auf der eindimensionalen Empfängereinrichtung bestimmt. Die Anzahl der benötigten Empfängerelemente bzw. Auflösungszellen der Empfängereinrichtung ist dabei gleich der Anzahl der zu unterscheidenden Höhenstufen. Ein derartiges, zweites Verfahren ist auch der «Produktinformation der Firma Selcom, Bruchfeld 100, 4150 Krefeld 12» zum Gerät «Optocator» zu entnehmen.

Bei einem weiteren bekannten Verfahren, dem dritten Verfahren, wird auf dem zu vermessenden Objekt mittels eines Spiegels, eines akustooptischen Ablenkers oder einer ähnlichen Einrichtung, ein Beleuchtungslichtbündel abgelenkt, so dass in einer Zeile, z.B. in x-Richtung, sequentiell ein Beleuchtungsfleck oder Lichtfleck auf dem Objekt erzeugt wird. Hierbei wird die Lage des Beleuchtungsfleckes auf dem Objekt von einem in der durch die Beleuchtungsrichtung und die Abtasteinrichtung aufgespannten Ebene angebrachten eindimensionalen Empfänger bestimmt. Die Höheninformation, z.B. in der z-Richtung, ergibt sich aus der Vor- bzw. Nacheilung der Abbildung des Beleuchtungsfleckes auf dem Empfänger. Bei diesem dritten Verfahren ist die Anzahl der benötigten Empfängerelemente bzw. Auflösungszellen der Empfängereinrichtung gleich der Anzahl der auf dem Objekt in Zeilenrichtung aufzulösenden Punkte, wobei dazu im allgemeinen die gewünschte Anzahl der zu unterscheidenden Höhenstufen addiert werden muss. Die Abtastung bzw. Vermessung in der verbleibenden Richtung, z.B. der y-Richtung, kann dabei durch mechanische Verschiebung des Objektes oder des Messkopfes erfolgen.

Bei einem vierten bekannten Verfahren wird mit einem schnell rotierenden Spiegelrad, einem akustooptischen Ablenker oder einer ähnlichen Einrichtung, z.B. in x-Richtung, eine Konturlinie erzeugt, die im allgemeinen senkrecht zur Beleuchtungs- und Abtastrichtung mit einem zweidimensionalen Empfänger betrachtet wird. Als zweidimensionaler Empfänger kann z.B. eine Fernsehkamera dienen. Diese vierte Art des Verfahrens ist als Lichtschnittverfahren bekannt. Hierbei ist die Anzahl der benötigten Empfängerelemente gleich dem Produkt aus den zu unterscheidenden Ortselementen in Abtastrichtung und der Anzahl der zu unterscheidenden Höhenstufen. Bei diesem vierten Verfahren kann z.B. die Vermessung in der weiteren dritten Dimension, z.B. der y-Richtung, durch mechanisches Verschieben des Objektes realisiert werden.

Speziell bei grösseren Objekten mit Abmessungen von z.B. 2 m × 2 m × 2 m weisen die vorausgehend aufgeführten vier Verfahren Nachteile auf. Sofern man eine grosse Auflösung erzielen will, muss der das zu vermessende Objekt abtastende Beleuchtungsfleck klein sein. Bei einem kleinen Durchmesser d des Beleuchtungsfleckes benötigt man jedoch eine grosse Abbildungsapertur u, wobei hierfür die Beziehung gilt

$$d = \frac{\lambda}{\sin u}.$$

Dies schränkt jedoch den Höhenmessbereich h, z.B. in z-Richtung, ein, denn die Schärfentiefe $\Delta z$ der Abbildung ist

$$\Delta z = \frac{\lambda}{\sin^2 u},$$

wobei gelten muss $\leqslant \Delta z$. Fordert man z.B. einen Durchmesser des Beleuchtungsfleckes von d = 0,1 mm, so liegt der Höhenmessbereich h bei ungefähr 20 mm. Diese Einschränkungen und Nachteile gelten sowohl im Beleuchtungsbereich wie auch im Abbildungsbereich, wobei im Abbildungsbereich die räumliche Lage des Beleuchtungsfleckes auf dem zu vermessenden Objekt bestimmt wird. Durch eine entsprechende Verarbeitung der Abbildung, z.B. durch eine Schwerpunktsbestimmung des Beleuchtungsfleckes auf der Empfängereinrichtung, lässt sich der Höhenmessbereich erweitern. Allerdings sind hier durch den erforderlichen Aufwand Grenzen gesetzt. Aus diesem Grunde sind das bekannte zweite, dritte und vierte Verfahren auf Objekte mit geringen Höhenschwankungen beschränkt. Dies gilt vor allen Dingen dann, wenn man eine hohe Auflösung in Abtastrichtung erreichen will.

Der weitere und ganz gravierende Nachteil besteht vor allen Dingen beim dritten und vierten Verfahren darin, dass bei einer Vermessung des Objektes mit hoher räumlicher Auflösung die Anzahl der Empfängerelemente bzw. Auflösungszellen in der Empfängereinrichtung ausserordentlich gross sein muss. Bei den bekannten ersten und zweiten Verfahren wäre zwar die Anzahl der benötigten Empfängerelemente bzw. Auflösungszellen geringer. Diese Verfahren eins und zwei sind jedoch wegen der zur Abtastung erforderlichen mechanischen Bewegung in mehreren Richtungen wesentlich langsamer.

Dieses Problem, eine hohe räumliche Auflösung über einen grossen Messbereich zu erreichen oder anders ausgedrückt, bei einer vorgegebenen Anzahl von Empfängerelementen und hoher Auflösung einen grossen Messbereich erfassen zu können, wird nachstehend kurz mit Messdynamik umrissen. Der Stand der Technik gestattet es, etwa eine im wesentlichen eindimensional angeordnete Empfängereinrichtung mit ca. 4000 Empfängerelementen auszulegen. Bei der Anwendung der vorausgehend beschriebenen Verfahren werden jedoch diese Elemente nicht optimal genutzt, da ein wesentlicher Teil dieser Empfängerelemente zur Bestimmung der Koordinaten des abzutastenden Objektes in der Abtast- bzw. Verschieberichtung der Beleuchtungslichtbündel benötigt wird. Hierdurch steht nur noch ein geringer Teil der Empfängerelemente für die Auflösung in der Höhenrichtung des Objektes, die im allgemeinen senkrecht zur Abtastrichtung des Objektes definiert werden kann, zur Verfügung.

Ausgehend von diesen Nachteilen liegt der Erfindung die Aufgabe zugrunde, ein Verfahren und eine Vorrichtung zur mehrdimensionalen Vermessung von insbesondere grossen Objekten auf der Basis der Triangulationsmethode so auszulegen, dass eine zeitlich relativ schnelle Vermessung des Objektes bei grosser räumlicher Auflösung mit einer relativ geringen Anzahl von Empfängerelementen erreichbar ist.

Diese Aufgabe wird bei einem gattungsgemässen Verfahren erfindungsgemäss durch die Merkmale des kennzeichnenden Teils des Anspruches 1 und bei einer gattungsgemässen Vorrichtung erfindungsgemäss durch die Merkmale des kennzeichnenden Teils des Anspruches 7 gelöst.

Der essentielle Erfindungsgedanke kann darin gesehen werden, dass bei einer zweidimensionalen Vermessung eines Objektes, z.B. längs der x-Achse, vereinfacht ausgedrückt, die Verschiebung der auf dem zu vermessenden Objekt entstehenden Beleuchtungsflecke nicht oder zumindest nicht ausschliesslich durch die Empfängerelemente erfasst wird, sondern diese Verschiebung längs der x-Achse kompensiert wird, so dass die gesamte Anzahl der zur Verfügung stehenden Empfängerelemente zur Erfassung der Veränderung des Objektes längs dieser abgetasteten x-Richtung ausgenutzt werden kann. Dies bringt den wesentlichen Vorteil, dass bei gleicher Anzahl der im Stand der Technik und in der Erfindung zur Verfügung stehenden Empfängerelemente eine wesentlich bessere Auflösung der Veränderung des Objektes, z.B. der Höhenerfassung des Objektes in z-Richtung, mit gleicher lateraler Auflösung durchgeführt werden kann. Die Kompensation der Verschiebung in der Abtastrichtung, die als Spur der Durchstosspunkte einer Folge von Beleuchtungslichtbündeln mit der Oberfläche des zu vermessenden Objektes definiert sein soll, wird dadurch erreicht, dass das zur Abbildung verwendete Abbildungslichtbündel zum entsprechenden Beleuchtungslichtbündel so gekoppelt abgelenkt wird, dass bei einer zweidimensionalen Vermessung, z.B. z(x), eine Verschiebung des Beleuchtungsfleckes in der Abtastrichtung x kompensiert werden kann. Die x-Koordinate selbst kann dabei im einfachsten Fall durch die Beleuchtungsrichtung des Beleuchtungslichtbündels ermittelt werden.

Um diese Kompensation unter einem nach Kosten-Nutzen-Aspekten vernünftigen Aufwand zu erreichen, geht die Erfindung den grundsätzlich neuen Weg ein «Referenzobjekt» zu definieren, dessen Geometrie von der Geometrie des Beleuchtungs- und Abbildungsbereiches abhängt, wobei gegebenenfalls auch der Empfängerbereich mitbeeinflussend sein kann. Diese grundsätzliche Idee ist ein wesentliches Merkmal der Erfindung. Mit anderen Worten wird die Kompensation der Verschiebung der Beleuchtungslichtbündel in einer Richtung nicht bezüglich des üblichen xyz-Koordinatensystem durchgeführt, sondern bezüglich eines Referenzobjektes. Die dreidimensionale Kontur dieses Referenzobjektes kann dabei relativ einfach in der Auswerteeinrichtung gespeichert werden. Der Vorteil, der sich durch diese Kompensation bezüglich des Referenzobjektes ergibt, liegt insbesondere in der relativ einfachen Geometrie des Beleuchtungs- und Abbildungsstrahlenganges, und speziell in der auf diese Weise erreichten, verblüffend einfachen gekoppelten Ablenkung des Abbildungslichtbündels.

Mit anderen Worten ist das Verfahren und die Vorrichtung gemäss der Erfindung so ausgelegt, dass auf dem fiktiven Referenzobjekt liegende Beleuchtungsflecke, die durch das eingesetzte Beleuchtungslichtbündel erzeugt werden, in die Empfangseinrichtung mittels des Abbildungslichtbündels so projiziert werden, dass alle auf dem fiktiven Referenzobjekt liegenden Beleuchtungsflecke in einem bestimmten Referenzwinkel zur optischen Achse der Abbildungseinrichtung nach der Ablenkung des Abbildungslichtbündels projiziert werden. Dieser Referenzwinkel ist konstant und kann sowohl Null als auch von Null verschieden sein. Alle auf dem tatsächlich zu vermessenden Objekt liegenden Beleuchtungsflecke werden dagegen in einem Winkel zur optischen Achse in der Empfängereinrichtung abgebildet, der variieren kann. Aus der Winkeldifferenz des jeweiligen Winkels mit dem Referenzwinkel kann dann in der Auswerteeinrichtung die Abweichung des zu vermessenden Objektes in der entsprechenden Beleuchtungsrichtung des Beleuchtungslichtbündels gegenüber dem Referenzobjekt ermittelt werden. Aus dieser Abweichung und der Beleuchtungsrichtung bzw. dem Ablenkungswinkel des Beleuchtungslichtbündels und/oder des Abbildungslichtbündels kann dann die räumliche Lage des entsprechenden Beleuchtungsfleckes auf dem zu vermessenden Objekt im xyz-Koordinaten-System berechnet werden. Unter Beleuchtungsrichtung wird hierbei die Richtung der Achse des jeweiligen Beleuchtungslichtbündels verstanden. Insbesondere bei zweidimensionaler Vermessung, z.B. z(x), kommt die Erfindung mit einer Empfangslinie bzw. mit in einer Linie angeordneten Empfängerelementen aus. Diese Empfangslinie kann jedoch auch für eine dreidimensionale Vermessung eines Objektes, also z(x,y), gelten, sofern die verwendeten Ablenkungseinrichtungen nicht nur in einer, sondern in zwei Koordinatenrichtungen, z.B. x,y, kompensieren, was bedeutet, dass diese Ablenkungseinrichtungen zweidimensional gekoppelt ablenken.

Die Emfangslinie ist so angeordnet, dass sie die optische Achse der Abbildungseinrichtung schneidet, wobei des weiteren erfüllt ist, dass die Empfangslinie in einer Ebene liegt, die durch die Achsen der Abbildungslichtbündel im Empfangsbereich gebildet wird. Genauer gesagt wird diese Ebene nach der zweiten Ablenkungseinrichtung von den Achsen der Abbildungslichtbündel der Beleuchtungsflecke von unterschiedlichen Objekten bei gleichen oder verschiedenen Beleuchtungslichtbündeln aufgespannt. Vorteilhafterweise ist diese Empfangslinie, abbildungstechnisch gesehen, eine geradlinige Strecke, die in einer Neigung zur optischen Achse angeordnet ist und diese in einem Punkt schneidet, so dass die «Scheimpflugbedingung» zur Erlangung einer scharfen Abbildung aller entlang des jeweiligen Beleuchtungslichtbündels auftretenden Beleuchtungsflecke auf die Empfangslinie durch die Abbildungseinrichtung erfüllt ist. Mit anderen Worten wird eine scharfe Abbildung des das Objekt abtastenden Beleuchtungsfleckes unabhängig von der Form des Objektes erreicht. Die Erfüllung der Scheimpflugbedingung ist wirkungsmässig mit einer Massnahme zur Schärfentiefenerweiterung vergleichbar. Massgebend war hierbei, diese Möglichkeit der scharfen Abbildung überhaupt erst zu erkennen und die Geometrie der Abbildungseinrichtung dementsprechend auszulegen. Eine vorteilhafte Lösung und Weiterbildung der Erfindung besteht darin, dass das Beleuchtungslichtbündel, das im allgemeinsten Sinn als Intensitätsverteilung einer Strahlung angesehen werden kann, und das Abbildungslichtbündel über zwei synchron ablenkende Ablenkungseinrichtungen geführt werden. Das Beleuchtungslichtbündel dient dabei dazu, auf dem zu vermessenden Objekt einen Beleuchtungsfleck oder eine definierte Intensitätsverteilung zu erzeugen, wo hingegen das Abbildungslichtbündel die Folge der Beleuchtungsflecke auf dem zu vermessenden Objekt in eine Empfängereinrichtung, die als photoempfindlicher Empfänger ausgelegt sein kann, abbildet. Die synchrone Ablenkung bzw. die gekoppelte Ablenkung erfolgt derart, dass die durch die Abtastung entstehende seitliche Verschiebung des abtastenden Beleuchtungslichtbündels relativ zur Empfängereinrichtung kompensiert wird. Von einem bestimmten Punkt in der Bildebene des Abbildungslichtbündels aus betrachtet, schneiden sich dann die optischen Achsen der Beleuchtungseinrichtung und der Abbildungseinrichtung für beliebige Ablenkwinkel in einer ebenen Raumkurve, wobei dies für spezielle Gestaltungen der Vorrichtung gilt. Um einen allgemein gültigen Terminus hierfür zu erreichen, wird die vorstehend benannte Raumkurve nachfolgend als «Referenzobjekt» bezeichnet. Das Referenzobjekt, das auch als Null-Linie betrachtet werden kann, nimmt z.B. bei telezentrischen Lichtbündeln im Zweidimensionalen die Form einer Geraden an. Wesentlich für dieses Referenzobjekt ist, dass alle Beleuchtungsflecke bzw. Oberflächenpunkte auf dem zu vermessenden Objekt, die gleichzeitig auch auf dem Referenzobjekt liegen, auf den gleichen Punkt der Bildebene in der Empfängereinrichtung abgebildet werden. Für Beleuchtungsflecke, die nicht auf dem Referenzobjekt liegen, verschiebt sich die Abbildung in der Empfängereinrichtung auf einer Geraden. Entlang dieser Geraden wird eine Empfängerlinie bzw. eine Empfängerzeile oder eine vorgebbare Anzahl von Empfängerelementen angeordnet. Aus der Abweichung der Abbildung eines beliebigen Beleuchtungsfleckes auf dem zu vermessenden Objekt gegenüber dem Referenzpunkt für das Referenzobjekt in der Empfängerlinie kann dann die Abweichung des zu vermessenden Objektes gegenüber dem Referenzobjekt berechnet werden. Die Bestimmung der räumlichen Lage eines auf dem Objekt vermessenen Punktes erfolgt dabei unter Einbeziehung der jeweiligen Winkelstellung mindestens der ersten Ablenkungseinrichtung. Abhängig von der Ausführungsart der gesamten Ablenkungseinrichtung muss der Ablenkungswinkel der zweiten Ablenkungseinrichtung, die zur Ablenkung des Abbildungslichtbündels dient, mit einbezogen werden oder kann unberücksichtigt bleiben. Zum Beispiel ist bei einer winkelstarren Kopplung der ersten und zweiten Ablenkungseinrichtung, die Einbeziehung des Ablenkungswinkels der zweiten Ablenkungseinrichtung zur Bestimmung der Koordinaten des auf dem Objekt vermessenen Punktes nicht erforderlich. Die Form des Referenzobjektes wird durch die Geometrie der Beleuchtungs- und Abbildungseinrichtungen bestimmt. Vorteilhafterweise kann hierbei auch der Weg gegangen werden, dem Referenzobjekt zumindestens über Teilbereiche einen dem zu vermessenden Objekt ähnlichen Konturverlauf zu geben. Massgebend ist hierbei jedoch, dass die Auslegung der optischen Einrichtungen zur Strahlungsführung, insbesondere im Hinblick auf die gekoppelte Ablenkung, relativ einfach und kostengünstig realisierbar ist.

Die Erfindung hat den wesentlichen Vorteil, dass für die Vermessung des zweidimensionalen Höhenprofils, also z.B. $z(x)$, nur eine eindimensionale Empfängereinrichtung in Form einer Linie von Empfängerelementen, die bezüglich des auf das Objekt projizierten Beleuchtungsfleckes positionsempfindlich ausgelegt sind, benötigt werden. Aufgrund der erfindungsgemäss vorhandenen Kompensation in einer Verschiebungsrichtung ist die Anzahl der erforderlichen Empfängerelemente gleich der Anzahl der aufzulösenden Höhenstufen in bezug auf das Referenzobjekt. Zur Kompensation der Verschiebung der Beleuchtungslichtbündel in einer Richtung eignet sich vorteilhafterweise eine winkelstarre Kopplung zwischen der ersten und der zweiten Ablenkungseinrichtung. Diese winkelstarre Kopplung kann gerade bei optischen Systemen in einfachster Weise dadurch realisiert werden, dass die erste und zweite Ablenkungseinrichtung in einer gemeinsamen Ablenkungseinrichtung integriert sind. Dies ist besonders deshalb zweckmässig, da die Steuerungs- und Antriebsmechanismen sowie die entsprechenden Sensoren zur Ermittlung der Ablenkung der Lichtbündel im Prinzip nur einmal zur Verfügung stehen müssen. Für diese Art einer gemeinsamen Ablenkungseinrichtung eignen sich besonders Drehspiegel, mit denen die Ablenkung der Lichtbündel sowohl auf einer Seite als auch bei doppelseitigen Spiegeln auf gegenüberliegenden Seiten durchgeführt werden kann. Ebenso sind polygonale Spiegelräder dafür geeignet, wobei die Ablenkung des Beleuchtungslichtbündels und des Abbildungslichtbündels an verschiedenen Spiegelradflächen erfolgt. Je nach Einsatzbereich können auch andere Ablenkungseinrichtungen, wie akustooptische oder elektrooptische Ablenker, elektronisch gesteuerte Kipp- oder Drehspiegel, starr verbundene Spiegel oder ein einziger grosser Spiegel eingesetzt werden. Die Kompensation des Abtast- bzw. Verschiebungsweges des Beleuchtungslichtbündels kann bezüglich einer Koordinate, z.B. in x-Richtung, erfolgen, wobei zur vollständigen Vermessung des Objektes, also z.B. des Höhenprofils $z(x,y)$, eine mechanische Verschiebung des Objektes in der verbleibenden Koordinatenrichtung, z.B. in y-Richtung, erfolgen kann. Die Erfindung ist jedoch nicht auf die zweidimensionale Vermessung von Objekten beschränkt, wobei hier die Kompensation in einer Richtung stattfindet, sondern es kann auch eine direkte dreidimensionale Vermessung durchgeführt werden. Im letzteren Fall ist es erforderlich, geeignete zweidimensionale Ablenkungseinrichtungen, die z.B. vorzugsweise als um zwei Achsen drehbare Spiegel ausgelegt sein können, verwendet werden. Als Alternative hierzu sind auch zwei eindimensionale Ablenkungseinrichtungen, die hintereinander angeordnet sind, verwendbar.

Da das erfindungsgemässe Verfahren als seriell arbeitendes Verfahren ausgelegt ist, worunter also die sukzessive und nacheinander erfolgende Abtastung bzw. Vermessung des Objekts mit endlich vielen Beleuchtungsflecken verstanden wird, so dass sich die Form des Objektes an endlich vielen Stellen ergibt, kommt das Verfahren mit einer Linie von Empfängerelementen aus. Hierdurch wird die Messdynamik zur Bestimmung des Koordinatenunterschiedes gegenüber dem Referenzobjekt, z.B. in Höhenrichtung z, bereits verbessert. Verfahren und Vorrichtung können deshalb auch zur Vermessung von Objekten eingesetzt werden, die z.B. auch in der dritten Dimension, der z-Richtung, eine starke Strukturierung aufweisen. Die räumliche Auflösung wird daher bei der Erfindung trotz eines grossen Messbereiches in allen drei Dimensionen im Vergleich zum Stand der Technik verbessert.

Um die Messdynamik im Abbildungsbereich oder Empfangsbereich noch zu verbessern, wird die Erfindung durch Massnahmen zur Schärfentiefenerweiterung in vorteilhafter Weise weitergebildet. Zweckmässigerweise wird hierzu die Empfangslinie bzw. die Linie der Empfängerelemente unter einem Winkel zur optischen Achse der nach der Ablenkung des Abbildungslichtbündels vorgesehenen Abbildungseinrichtung angeordnet, wobei die Empfangslinie die optische Achse in einem Punkt schneidet, in den der Schnittpunkt des jeweiligen Beleuchtungsbündels mit der optischen Achse der Abbildungseinrichtung vor der Ablenkung der Abbildungslichtbündel in den Empfangsbereich abgebildet wird. Der Neigungswinkel $\phi'$ gegenüber der optischen Achse der Abbildungseinrichtung nach der Ablenkung wird dabei so bestimmt, dass er eine Funktion des Winkels $\phi$ ist, unter den sich das jeweilige Beleuchtungslichtbündel und die optische Achse der Abbildungseinrichtung im Objektbereich vor der Ablenkung schneiden. Unter Berücksichtigung des Abbildungsmassstabes $\beta$ der Abbildungseinrichtung wird der Neigungswinkel $\phi'$ der Empfängerlinie so bestimmt, dass $\beta \cdot \tan \phi' = \tan \phi$ ist.

Die Schärfentiefenerweiterung auf der Empfängerlinie kann vorzugsweise auch dadurch erreicht werden, dass die Linie der Empfängerelemente gemäss der Scheimpflugbedingung gegen die optische Achse der Abbildungseinrichtung nach der Ablenkung des Abbildungslichtbündels geneigt ist. Zweckmässigerweise kann auch ergänzend oder alternativ dazu ein Axicon oder eine Linse mit Ringpupille in den Strahlengang des Abbildungslichtbündels zwischengeschaltet werden. Eine weitere Verbesserungsmöglichkeit bei der Abbildung besteht darin, dass mittels eines Verfahrens der Bildverarbeitung zusätzlich der Schwerpunkt des Beleuchtungsfleckes bzw. der Intensitätsverteilung auf dem Objekt bzw. in der Empfangslinie ermittelt wird. Generell gesehen kann die Schärfentiefenerweiterung im Abbildungsbereich dadurch verbessert und erreicht werden, dass das Abbildungslichtbündel verfahrensmässig so beeinflusst wird, dass ein ausgeprägtes Intensitätsmaximum seiner Lichtverteilung längs der Lichtbündelachse, insbesondere längs eines grossen Bereichs der Lichtbündelachse im Objektbereich, erreicht wird. Die Ablenkung des Beleuchtungslichtbündels und des Abbildungslichtbündels kann vorteilhafterweise phasenstarr gekoppelt um jeweils den gleichen Winkel erfolgen. Speziell bei telezentrischen oder zentrischen Beleuchtungs- und Abbildungslichtbündeln vereinfacht dies das Ablenkungssystem.

Allgemeiner betrachtet wird eine winkelstarre Kopplung der Ablenkung des Beleuchtungslichtbündels und des zugeordneten Abbildungslichtbündels so durchgeführt, dass der Winkel α zwischen den Achsen zweier beliebiger Beleuchtungslichtbündel und der Winkel α' zwischen den jeweiligen zugeordneten optischen Achsen der Abbildungseinrichtung im Objektbereich vor der Ablenkung der Abbildungslichtbündel gleich ist.

Da die verfahrens- oder vorrichtungsmässig erreichbare Messdynamik durch die Schärfentiefenerweiterung im Beleuchtungsbereich mitbeeinflusst wird, werden auch in diesem Bereich vorteilhafterweise Massnahmen ergriffen, die dies ermöglichen. Die Projizierung des Beleuchtungsfleckes auf das zu vermessende Objekt erfolgt dementsprechend durch eine die Schärfentiefe erweiternde Methode. Eine Massnahme dieser Art ist aus dem Deutschen Patent DE-PS 23 01 800 bekannt. Vorzugsweise wird in den Strahlengang des Beleuchtungslichtbündels ein Axicon oder eine Linse mit Ringpupille zwischengeschaltet. Diese Massnahmen und Vorrichtungen erlauben es, dass sich das dadurch entstehende Interferenzmuster längs der optischen Achse über eine Distanz von mehreren Metern nur unwesentlich ändert, so dass ein «lichtstiftartiges» Beleuchtungslichtbündel vorhanden ist. Hierbei kann der Durchmesser des in der optischen Achse liegenden Intensitätsmaximums etwa 100 µm oder weniger betragen. Das Intensitätsmaximum wird insbesondere längs eines grossen Bereichs der Lichtbündelachse im Objektbereich vorgesehen. Als Lichtquelle zur Erzeugung eines derartigen Strahlenganges eignet sich besonders ein Laser. Ebenso können andere Strahlungsquellen zur Erzeugung kohärenter Wellen benutzt werden.

Eine andere Massnahme zur Schärfentiefenerweiterung besteht darin, den scharfen Objektpunkt bzw. ein fokussiertes Lichtbündel schnell entlang der optischen Achse der Beleuchtungseinrichtung zu bewegen, so dass im Zeitmittel ebenfalls ein «lichtstiftartiges» Lichtbündel entsteht. Je nach Anwendungsfall kann auch auf dem Objekt eine Lichtverteilung erzeugt werden, die sich bei Defokussierung selbst reproduziert. Hierzu werden vorzugsweise Gitter oder Fresnel-Zonenplatten verwendet.

Vorteilhafterweise arbeitet die Erfindung mit telezentrischen Beleuchtungs- und Abbildungslichtbündeln, d.h. dass z.B. alle Beleuchtungslichtbündel im Objektraum parallel zueinander verlaufen. Gleiches gilt für alle zugehörigen optischen Achsen der Abbildungseinrichtung. Die zugehörigen optischen Achsen der Abbildungseinrichtung resultieren aus der Ablenkung des Abbildungsstrahlenganges bzw. der entsprechenden Lichtbündel und beispielsweise aus der Faltung an vorhandenen Spiegeln. Hierdurch schneiden sich alle Beleuchtungslichtbündel und ihre zugehörigen optischen Achsen der Abbildungseinrichtung unter dem gleichen festen Winkel. Dies ergibt einen wesentlichen Vorteil hinsichtlich der vereinfachten Ablenkung, aber insbesondere auch eine hohe ortsunabhängige Genauigkeit bei der Vermessung des dreidimensionalen Objektes.

Aufgrund der Kompensation ist es möglich, die Linie der Empfängerelemente geradlinig anzuordnen, so dass von einer eindimensionalen Empfängerzeile gesprochen werden kann. Der Ausdruck «eindimensional» berücksichtigt dabei nicht die dreidimensionale Abmessung des einzelnen Empfängerelementes, sondern fasst diese als punktartig aneinander geordnete Empfängerelemente auf. Prinzipiell gesehen könnte die Linie der Empfängerelemente auch einen zweidimensionalen, z.B. Bogensegment-Verlauf annehmen. Die geradlinige Anordnung bringt jedoch eine erhebliche konstruktive Vereinfachung, wobei dies durch vorgesehene Massnahmen zur Schärfentiefenerweiterung nicht zu Lasten der Messdynamik geht.

Zweckmässigerweise werden die erste und zweite Ablenkungseinrichtung für die entsprechenden Lichtbündel als ein Ablenkspiegel ausgelegt, wobei die gemeinsame Drehachse geeigneterweise in der Längsmittelachse, z.B. bei Kippspiegel, zu liegen kommt. Bei einem polygonalen Spiegelrad liegt die gemeinsame Drehachse in der Rotationsachse des Spiegelrades.

Das zur Kompensation der Verschiebung der Lichtbündel in einer Richtung eingeführte Referenzobjekt kann ein beliebiger sphärischer Körper sein, wobei die Form einer Geraden, einer Ebene, einer Kreis- oder Zylindermantelfläche oder eines Kugelflächensegmentes die im Hinblick auf die Auslegung der optischen Vorrichtung geeignetsten Formen sind.

Betrachtet man die zweidimensionale Vermessung eines Objektes mittels der Erfindung, so sind die Vorteile erkennbar, dass zur Ermittlung des Höhenprofils, z.B. z-Richtung, nur eine eindimensionale Empfängerzeile benötigt wird. Die Anzahl der Empfängerelemente muss nicht grösser sein als die im entsprechenden Fall gewünschte Anzahl von auflösbaren Höhenstufen und hängt nicht von der Anzahl der Messpunkte in der Abtastrichtung bzw. in der Verschiebungsrichtung des Beleuchtungslichtbündels auf dem Objekt ab. Neben der daraus resultierenden technischen Vereinfachung ist auch bei vergleichbarem Zeitaufwand mit Verfahren des Standes der Technik die mögliche Anzahl der Messpunkte bei der Erfindung grösser als im Stand der Technik. Durch die Anwendung der erwähnten Methoden zur Schärfentiefenerweiterung im Beleuchtungs- und/oder im Abbildungsbereich ist die Vermessung von Höhenprofilen mit hoher räumlicher Auflösung unabhängig von der Höhe des Objektes möglich. Die erzielbare Genauigkeit ist nur durch die Qualität der abbildenden optischen Elemente und die Anzahl der Empfängerelemente im Detektor begrenzt. Die dreidimensionale Vermessung von Objekten mit serieller Abtastung erfolgt daher bei der Erfindung wesentlich schneller bei geringerem Aufwand und mit höherer Messdynamik als bei vergleichbaren Verfahren.

Die Erfindung wird nachstehend anhand bevorzugter Ausführungsbeispiele noch näher erläutert. Es zeigen:

Figur 1 den schematischen Aufbau und den Strahlengang bei einer Vorrichtung, die telezentrische Beleuchtungslichtbündel und Abbildungslichtbündel erzeugt, wobei das Referenzobjekt eine Gerade ist;

Figur 2 den schematischen Aufbau eines zweiten Ausführungsbeispieles einer Vorrichtung in leicht perspektivischer Betrachtung, wobei als Referenzobjekt eine kreisförmige Linie vorgesehen ist und zentrische Beleuchtungs- und Abbildungslichtbündel verwendet werden;

Figur 3 a das Beispiel nach Fig. 2 mit einem schematischen Schnitt durch die Vorrichtung und das zu vermessende Objekt in Abtastrichtung;

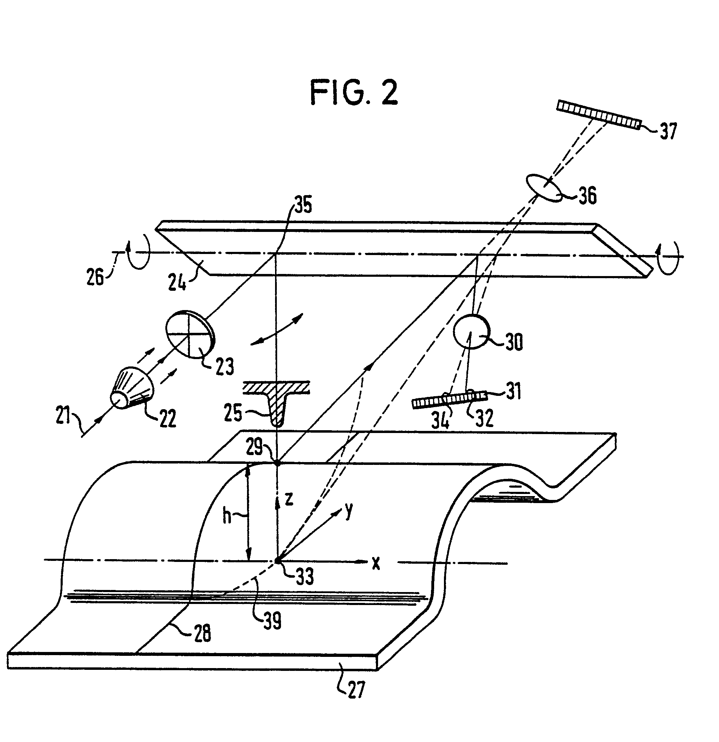

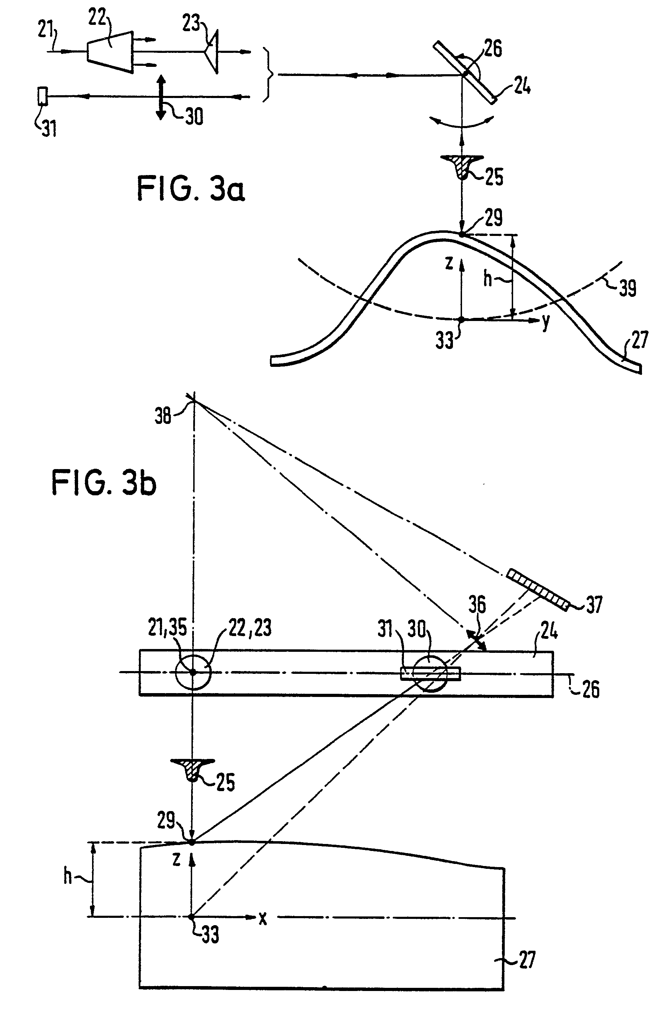

Figur 3 b eine teilweise projektionsartige Betrachtung des Beispieles nach der Fig. 2 in der xz-Ebene und

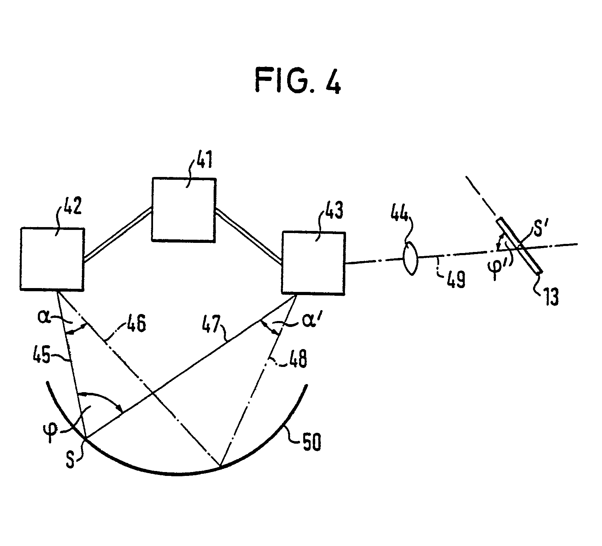

Figur 4 eine Prinzipskizze zur Erläuterung der Winkelrelation bei winkelstarrer Ablenkung und der Neigungsanordnung der Empfängerlinie gegenüber der optischen Achse.

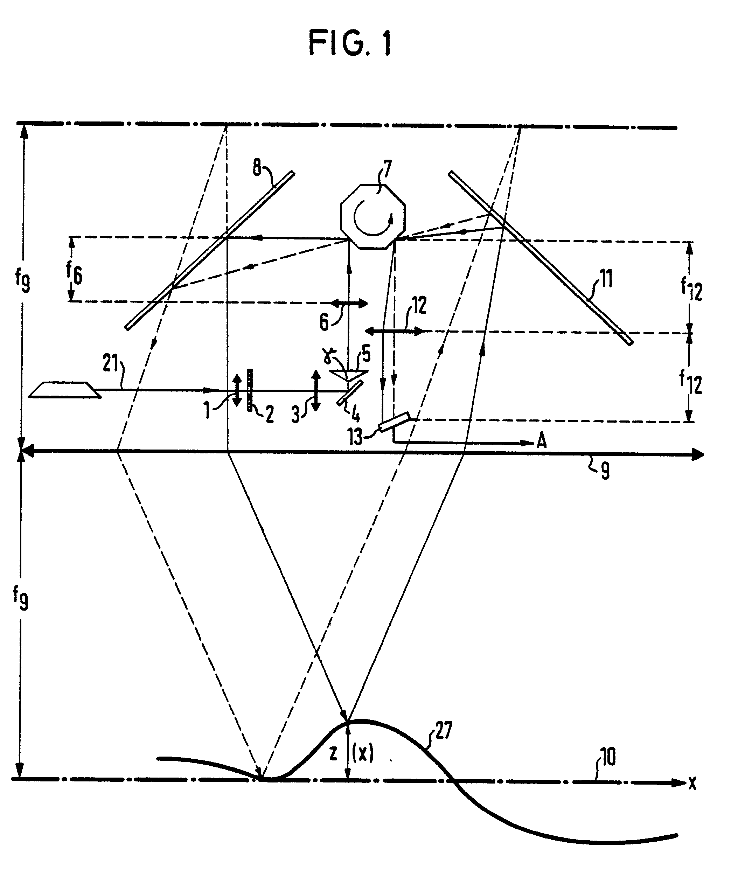

Im Beispiel nach der Fig. 1 wird zur Erzeugung des Beleuchtungslichtbündels ein Laserstrahl verwendet, der durch eine Linse 1, eine im Strahlengang nachgeordnete Blende 2 und eine weitere Linse 3 aufgeweitet wird. Im weiteren Strahlengang befindet sich nach einem festen Umlenkspiegel 4 ein zur Schärfentiefenerweiterung benutztes Axicon 5. Das Beleuchtungslichtbündel wird nach dem Axicon 5 durch eine Linse 6 geführt, die im Abstand ihrer Brennweite $f_6$ vor der ablenkenden Fläche eines Spiegelrades 7, die die erste Ablenkungseinrichtung bildet, angeordnet ist. Der weitere Strahlengang des Beleuchtungslichtbündels erfolgt über einen weiteren festen Umlenkspiegel 8 und eine Linse 9. Die Linse 9 weist eine Brennweite $f_9$ auf. Die Anordnung ist dabei so getroffen, dass der Abstand der Fläche des Spiegelrades 7 über den festen Umlenkspiegel 8 zur Linse 9 gleich dem Abstand der Linse 9 von dem als Gerade dargestellten Referenzobjekt 10 ist. Das heisst, der optische Weg eines Beleuchtungslichtbündels zwischen der Fläche des Spiegelrades 7 und der Linse 9 sowie zwischen der Linse 9 und dem Referenzobjekt 10 ist jeweils gleich der Brennweite $f_9$. Zur Abbildung bzw. Beobachtung der Intensitätsverteilung bzw. der Beleuchtungsflecke auf dem zu vermessenden Objekt wird das Abbildungslichtbündel über die Linse 9, einen feststehenden Umlenkspiegel 11, eine weitere Fläche des Spiegelrades 7, die die zweite Ablenkungseinrichtung bildet, und eine Linse 12 geführt. Die Linse 12 bildet in diesem Beispiel die Abbildungseinrichtung nach der Ablenkung. Im Empfangsbereich nach der Linse 12 ist eine Empfängereinrichtung 13 angeordnet, in der der Beleuchtungsfleck abgebildet wird. Die optische Weglänge zwischen der Linse 9 und dem Referenzobjekt 10 sowie zwischen der Linse 9, dem Umlenkspiegel 11 und der kompensierenden Fläche des Spiegelrades 7 im Abbildungsstrahlengang entsprechen jeweils der Brennweite $f_9$. Die optischen Weglängen von der Fläche des Spiegelrades 7 zur Linse 12 und von dieser zum Schnittpunkt der optischen Achse des Abbildungsstrahlenganges mit der als Detektor ausgelegten Empfängereinrichtung 13 sind jeweils gleich der Brennweite $f_{12}$ der Linse 12. Die Pupille des Beleuchtungs- bzw. des Abbildungslichtbündels liegt in der ablenkenden bzw. kompensierenden Fläche des Spiegelrades 7. Durch Drehen des Spiegelrades 7 wird eine Konturlinie des Objektes punktweise abgetastet. Der in Fig. 1 ausgezogene Strahlengang ergibt sich für die eingezeichnete Stellung des Spiegelrades 7. Der mit unterbrochener Linie eingezeichnete Strahlengang ergibt sich demgegenüber nach einer Drehung des Spiegelrades um 10°. Die von der Empfängereinrichtung 13 gelieferte Höheninformation wird in einer Auswerteeinrichtung A digital einer Winkelstellung des Spiegelrades 7 und damit einem Abtastort bzw. der Lage eines Beleuchtungsfleckes auf dem zu vermessenden Objekt zugeordnet. Der Antrieb des Spiegelrades 7 kann z.B. mit einem Schrittmotor oder kontinuierlich mit Frequenzstabilisierung erfolgen. Im letzteren Fall werden mit ausserhalb des Objekt- bzw. Messraumes liegenden Apparaturen Synchronisationsimpulse erzeugt. Zur Vermessung der dreidimensionalen Form, also z (x,y), wird das Objekt zusätzlich senkrecht zur Abtastrichtung, die im Beispiel nach Fig. 1 die x-Achse ist, verschoben, wobei dies zweckmässigerweise auf einem Transportwagen erfolgen kann.

Durch die spezielle Anordnungslage der dem Beleuchtungs- und Abbildungsstrahlengang gemeinsamen Linse 9 und ihrer jeweiligen Pupille wird erreicht, dass sowohl alle Beleuchtungslichtbündel wie auch alle optischen Achsen der Abbildungseinrichtung im Objektraum parallel, also telezentrisch sind und sich unter dem gleichen festen Winkel schneiden. Hierdurch wird eine ortsunabhängige Genauigkeit der Formvermessung erreicht. Unter Objektraum wird hierbei der Raum unterhalb der Linse 9 einschliesslich des zu vermessenden Objektes verstanden.

Das im Beispiel verwendete Axicon 5 ist eine Kegellinse. Der Scheitelwinkel γ des zur Schärfentiefenerweiterung benutzten Axicons 5 im Strahlengang des Beleuchtungslichtbündels ist so zu wählen, dass der auf dem Objekt erzeugte Beleuchtungsfleck bzw. dessen Ringstruktur den gewünschten Durchmesser d des zentralen Maximums und die gewünschte Gesamtausdehnung längs der Achse des Beleuchtungslichtbündels besitzt. Hierbei gilt

$$d = \frac{1,2\,\lambda}{\pi\,(n-1)\,\gamma}$$

wobei λ die Wellenlänge des verwendeten Lichtes und n die Brechzahl des Axiconmaterials ist. Zur Erzielung eines grossen Schärfentiefenbereichs in Beleuchtungsrichtung wird der Abstand von Axicon 5 zur Linse 6 so gewählt, dass das Axicon durch die Linsen 6 und 9 in den Objektraum oberhalb der grössten zu erwartenden Objekthöhe abgebildet wird.

Zur Erzielung einer scharfen Abbildung der das Objekt abtastenden Beleuchtungsflecke über das Abbildungslichtbündel auf die Empfängereinrichtung 13 wird die Empfängereinrichtung 13 gemäss der Scheimpflug-Bedingung gegen die optische Achse der Abbildungseinrichtung geneigt.

Ein weiteres Ausführungsbeispiel ist in den Figuren 2, 3a und 3b gezeigt. Das von einem nicht dargestellten Laser ausgehende Beleuchtungslichtbündel 21 wird durch einen Kollimator 22 aufgeweitet. Dieses aufgeweitete Lichtbündel geht dann durch ein Axicon 23, das entlang der optischen Achse eine enge Lichtverteilung 25 mit hellem Kern erzeugt. Es wird hierdurch ein stark ausgeprägtes Intensitätsmaximum der Lichtverteilung erreicht. Das im Beispiel nach Fig. 2 vorgesehene zu vermessende Objekt 27 wird mit Hilfe eines Drehspiegels 24 sozusagen punktmässig abgetastet. Die Drehachse 26 des Drehspiegels 24 liegt dabei in der Spiegelebene. Das abtastende Beleuchtungslichtstrahlenbündel erzeugt sequentiell eine Konturlinie 28 auf dem Objekt 27. In der gezeigten Spiegelstellung liegt der Beleuchtungsfleck gerade in der Position 29. Nach der Reflektion dieses Beleuchtungsfleckes am Drehspiegel 24 wird der Beleuchtungsfleck durch eine Linse 30 auf eine detektierende Linie von Empfängerelementen 31 in der Position 32 abgebildet. Die Abbildung des Punktes 33, der zufällig als Nullpunkt des xyz-Koordinatensystems angenommen ist, erfolgt im Ausführungsbeispiel nach der Fig. 2 in der Position 34 der Empfängereinrichtung 31. Die Differenz zwischen der Position 32 und 34 in der Empfängereinrichtung 31 zeigt dabei die Höhe h der Kontur des zu vermessenden Objektes an der Position 29 an.

Im Beispiel nach Fig. 2 und der dort gezeigten Geometrie der Beleuchtungseinrichtung ist das Referenzobjekt 39 ein Kreisbogen um den Punkt 35, wobei der Radius gleich der Entfernung zwischen den Punkten 35 und 33 ist. Von der Vorrichtung werden daher Höhendifferenzen zum Referenzobjekt bzw. im Beispiel zum Kreisbogen angezeigt.

Die Abbildung des Beleuchtungsfleckes in der Position 29 geschieht mit erweiterter Schärfentiefe vorzugsweise dadurch, dass eine passende Neigung der Empfängereinrichtung zur optischen Achse gewählt wird, wobei die gewählte Neigung der Scheimpflugbedingung entspricht. Diese Scheimpflugbedingung sei durch den entfalteten Strahlengang 36, 37, 38 unter Bezug auf die Figuren 2 und 3 b erläutert. Das virtuelle Linsenbild 36 ist das Spiegelbild der Linse 30. Das Spiegelbild der Empfängereinrichtung 31 bzw. der Empfängerzeile ist in Position 37 dargestellt. Orientiert man die z-Ebene, die Hauptebene der Linse 36 und die Empfängereinrichtung 37 so, dass sich ihre Verlängerungen in der Position 38 schneiden, so erhält man eine scharfe Abbildung auf der Linie der Empfängerelemente unabhängig von der z-Koordinate des Beleuchtungsfleckes.

Die erweiterte Schärfentiefe kann alternativ durch eine die Schärfentiefe erweiternde Abbildung erfolgen, wozu z.B. eine Ringpupille vor der Linse 30 angeordnet werden kann.

Zur Abtastung des zu vermessenden Objektes in x-Richtung wird das Objekt vorzugsweise auf einem Transportwagen mechanisch bewegt.

Die beiden Ausführungsbeispiele gemäss der Fig. 1 bzw. gemäss den Figuren 2, 3a und 3b unterscheiden sich bezüglich der Art, wie die Kompensation des Abtast- oder Verschiebeweges realisiert wird und in der Form des «Referenzobjektes». Im ersten Ausführungsbeispiel nach Fig. 1 lässt sich durch Weglassen der Linse 6 und der Linse 9 sowie durch entsprechende Änderung der Brennweite $f_{12}$ der Linse 12 ebenfalls ein annähernd kreisförmiges «Referenzobjekt» erreichen. Desgleichen lassen sich beim zweiten Ausführungsbeispiel nach den Figuren 2, 3a und 3b durch Hinzufügen zweier Linsen im Beleuchtungsstrahlengang und einer weiteren Linse im Abbildungsstrahlengang analog zur Anordnung in Fig. 1 telezentrische Beleuchtungs- und Abbildungslichtbündel erzielen.

In Fig. 4 ist in einer Prinzipskizze die Neigung der Empfängereinrichtung 13 mit einem Winkel φ' zur optischen Achse 49 einer Abbildungseinrichtung 43, 44 dargestellt. Die Abbildungseinrichtung besteht im Beispiel nach Fig. 4 aus einer Ablenkungseinrichtung 43 mit einem Abbildungselement 44. Des weiteren enthält diese Skizze beispielhaft die Relationen für eine winkelstarre Kopplung einer ersten Ablenkungseinrichtung 42 mit der zweiten Ablenkungseinrichtung 43 über eine Kopplungseinrichtung 41. Das Referenzobjekt 50 ist im Beispiel der Fig. 4 ein Kreisbogen. Ein erstes Beleuchtungslichtbündel 45 ist ab der Ablenkungseinrichtung 42 eingezeichnet und ist nach einer Winkelablenkung um den Winkel α mit unterbrochener Linie als Beleuchtungslichtbündel 46 dargestellt.

Im Abbildungsbereich ist die Abbildungseinrichtung 43, 44 mit der optischen Achse 47 gezeigt. Nach Ablenkung der optischen Achse durch die Ablenkungseinrichtung 43 bei winkelstarrer Kopplung zur Ablenkung des Beleuchtungslichtbündels durch die Ablenkungseinrichtung 42 verläuft die optische Achse in der strichpunktierten Linie 48, so dass die optische Achse der Abbildungseinrichtung 43, 44 im Objektbereich eine Winkeldrehung um α' erfahren hat. Bei einer winkelstarren Kopplung durch die Kopplungseinrichtung 41 bedeutet dies, dass der Winkel α' gleich dem Winkel α wird, wobei die optische Achse 49 nach der Ablenkungseinrichtung 43 festliegt.

Im Hinblick auf die Schärfentiefenerweiterung im Abbildungsbereich wird die Empfängereinrichtung 13 in einem Schnittpunkt S′ mit der optischen Achse 49 angeordnet, wobei dieser Schnittpunkt S′ die Abbildung des Schnittpunktes S bzw. des Durchstosspunktes eines Beleuchtungslichtbündels 45 mit der Oberfläche des Referenzobjektes 50 ist. Der Neigungswinkel φ′ der Empfängereinrichtung 13 gegenüber der optischen Achse 49 errechnet sich unter Berücksichtigung des Abbildungsmassstabes β der Abbildungseinrichtung 43, 44 nach der Ablenkung derart, dass β · tan φ′ gleich dem Tangens des Winkels φ ist, der zwischen einem Beleuchtungslichtbündel 45 und der optischen Achse 47 der Abbildungseinrichtung 43, 44 im Objektbereich gebildet wird.

Die Erfindung schafft daher ein optisches Verfahren und eine entsprechende Vorrichtung zur Ermittlung der dreidimensionalen Form von Objekten mit hoher räumlicher Auflösung und gleichzeitig grossem Messvolumen. Bei derartigen Verfahren und Vorrichtungen ist eine Beleuchtung des Objektes mit sehr kleinen Beleuchtungsflecken, einer schmalen Lichtlinie oder einer feinstrukturierten Intensitätsverteilung nötig. Die Dimensionen der verwendeten Lichtbündel sollen im ganzen Messvolumen relativ klein sein, wobei ausserdem die Position des Beleuchtungsfleckes auf dem Objekt mittels einer Abbildung in eine positionsempfindliche Empfängereinrichtung mit grosser Genauigkeit bestimmt werden soll. Das verwendete Abbildungslichtbündel resultiert im Prinzip aus dem Streulicht des jeweiligen Beleuchtungsfleckes auf dem Objekt.

Das Verfahren und die Vorrichtung gemäss der Erfindung werden daher vorteilhafterweise so ausgelegt, dass die durch die Abtastung des Objektes entstehende seitliche Verschiebung der abtastenden Intensitätsverteilung auf dem Objekt gegenüber dem positionsempfindlichen Empfänger kompensiert wird, dass weiterhin die Erzeugung der abtastenden Intensitätsverteilung mit gegenüber der konventionellen Abbildung erweiterter Schärfentiefe erfolgt, und dass die Abbildung der am Objekt gestreuten Intensitätsverteilung auf den positionsempfindlichen Empfänger mit gegenüber der konventionellen Abbildung erweiterter Schärfentiefe erfolgt. In einer anderen Ausführung wird das Verfahren und die Vorrichtung vorteilhafterweise so konzipiert, dass die abtastende Intensitätsverteilung rasch über das Objekt bewegt wird, dass die Beobachtung der entstehenden Konturlinie auf einem zweidimensional-positions-empfindlichen Empfänger erfolgt, dass die Erzeugung der abtastenden Intensitätsverteilung mit gegenüber der konventionellen Abbildung erweiterter Schärfentiefe erfolgt und dass die Abbildung der am Objekt gestreuten Intensitätsverteilung auf den positionsempfindlichen Empfänger mit gegenüber der konventionellen Abbildung erweiterter Schärfentiefe erfolgt.

Alternativ können das Verfahren und die Vorrichtung geeigneterweise so ausgelegt, dass die durch die Abtastung des Objektes entstehende seitliche Verschiebung der abtastenden Intensitätsverteilung auf dem Objekt gegenüber dem positionsempfindlichen Empfänger kompensiert wird und dass die Abbildung der am Objekt gestreuten Intensitätsverteilung auf einen gemäss der Scheimpflugbedingung so angeordneten positionsempfindlichen Empfänger erfolgt, dass scharfe Abbildung im ganzen Messbereich erreicht wird.

Das grundlegende Prinzip der Erfindung ist darin zu sehen, dass die durch die Abtastung des Objektes entstehende seitliche Verschiebung der abtastenden Intensitätsverteilung auf dem Objekt gegenüber dem positionsempfindlichen Empfänger kompensiert wird.

Vorteilhafterweise wird dies so gelöst, dass die Kompensation der Abtastbewegung durch Führen des Beleuchtungs- und Abbildungsstrahlenganges über zwei synchron ablenkende Lichtablenker bzw. Ablenkungseinrichtungen erfolgt. Geeigneterweise erfolgt dies so, dass die Kompensation der Abtastbewegung durch Führung des Beleuchtungs- und Abbildungsstrahlengangs über einen gemeinsamen Lichtablenker erfolgt.

Hierzu wird vorteilhafterweise ein einziger drehbarer Spiegel als Lichtablenker verwendet.

In anderer Ausführungsform können geeigneterweise zwei starrverbundene Spiegel als Lichtablenker verwendet werden.

In einer vorteilhaften Weiterbildung der Erfindung werden als Lichtablenker zwei verschiedene Flächen eines Spiegelrades verwendet.

Geeigneterweise können als Lichtablenker auch die Vorder- und Rückseite eines beidseitigen Spiegels verwendet werden. Verfahren und Vorrichtung werden dadurch weitergebildet, dass zur Schärfentiefenerweiterung im Beleuchtungsstrahlengang ein Axicon verwendet wird.

Ebenso kann vorteilhafterweise die Schärfentiefenerweiterung im Beleuchtungsstrahlengang mittels einer Ringpupille erreicht werden.

Als weitere vorteilhafte Weiterbildung kann die Schärfentiefenerweiterung im Beleuchtungsstrahlengang auch durch schnelles Verschieben des abtastenden Lichtpunktes bzw. des Fokus des Lichtbündels entlang der optischen Achse des Beleuchtungsstrahlenganges erreicht werden.

Das Verfahren und die Vorrichtung können auch so weitergebildet werden, dass die Schärfentiefenerweiterung im Beleuchtungsstrahlengang durch Verwendung einer Intensitätsverteilung auf dem Objekt erzeugt wird, die sich bei Defokussierung selbst reproduziert.

Hierzu wird geeigneterweise ein Fresnel-Zonenmuster verwendet. Als weitere vorteilhafte Alternative bietet sich hierfür die Verwendung eines Gitters an.

Die Schärfentiefenerweiterung im Abbildungsstrahlengang wird vorteilhafterweise mit gleichen Methoden wie im Beleuchtungsstrahlengang bewirkt, d.h. dass ein Axicon, eine Ringpupille oder das schnelle Verschieben der Schärfenebene entlang der optischen Achse verwendet wird.

Gemäss einer weiteren Ausgestaltung der Erfindung wird die Empfängereinrichtung gegenüber der optischen Achse des Abbildungsstrahlenganges gemäss der Scheimpflugbedingung so geneigt angeordnet, dass eine scharfe Abbildung der abtastenden Intensitätsverteilung im ganzen Messbereich erreicht wird.

Zur genaueren räumlichen Lagebestimmung eines Beleuchtungsfleckes auf dem zu vermessenden Objekt ist es vorteilhaft, den Schwerpunkt des Bildes der abtastenden Intensitätsverteilung zu ermitteln.

Vorteilhafterweise wird als positionsempfindliche Empfängereinrichtung eine eindimensionale Anordnung photoempfindlicher Elemente verwendet.

Vorteilhafterweise wird die optische Achse des Abbildungsstrahlenganges in die durch die Beleuchtungslichtbündel aufgespannte Ebene gelegt.

Bei einer anderen vorteilhaften Ausgestaltung wird die optische Achse des Abbildungsstrahlenganges senkrecht zur Abtast- bzw. Verschieberichtung angeordnet.

Eine weitere besonders vorteilhafte Wirkung ergibt sich dadurch, dass durch Anordnung eines fokussierenden Elementes im Beleuchtungs- und Abbildungsstrahlengang zwischen der Ablenkungseinrichtung und dem Objekt- bzw. Messraum, im Objektraum telezentrische Beleuchtungs- und Abbildungslichtbündel erzielt werden.

Durch Anordnung eines fokussierenden Elementes im Strahlengang der Beleuchtungslichtbündel zwischen der Ablenkungseinrichtung und dem Objektraum können vorteilhafterweise telezentrische Beleuchtungslichtbündel erreicht werden. Alternativ zur ausschliesslichen Kompensation der Abtastrichtung kann geeigneterweise auch unter Umgehung der Kompensation zusätzlich eine direkte Beobachtung des am Objekt gestreuten Lichtes erfolgen und dadurch das Verfahren als Lichtschnittverfahren mit erweiterter Schärfentiefe benutzt werden.

Insgesamt gesehen wird daher die Möglichkeit geschaffen, dreidimensionale Objekte mit grosser räumlicher Auflösung bei gleichzeitig grossem Messbereich in allen drei Dimensionen schnell zu vermessen, ohne durch die begrenzte Schärfentiefe und die Zahl der Auflösungselemente bekannter, erhältlicher Empfängereinrichtungen stark eingeschränkt zu sein.

## Patentansprüche

1. Verfahren zur mehrdimensionalen Vermessung eines Objektes, bei dem das Objekt mit einem Beleuchtungslichtbündel beleuchtet wird, bei dem durch Ablenken des Beleuchtungslichtbündels in vorgebbare Beleuchtungsrichtungen eine Folge von Beleuchtungsflecken auf dem Objekt erzeugt wird, bei dem die Beleuchtungsflecke nacheinander durch Abbildungslichtbündel in von den Beleuchtungsrichtungen verschiedenen Abbildungsrichtungen in einen Empfangsbereich abgebildet werden und bei dem die Position der Abbildungen der Beleuchtungsflecke im Empfangsbereich bestimmt und daraus sowie aus der Beleuchtungsrichtung die räumliche Lage der Beleuchtungsflecke auf dem zu vermessenden Objekt ermittelt wird, dadurch gekennzeichnet, dass das Beleuchtungslichtbündel und das für die Abbildung eines Beleuchtungsfleckes verwendete Abbildungslichtbündel abgelenkt werden, dass die Ablenkung des Beleuchtungslichtbündels und des Abbildungslichtbündels so gekoppelt erfolgt, dass alle Beleuchtungsflecke auf einem vorgebbaren Referenzobjekt unter einem bestimmten Referenzwinkel zur optischen Achse der Abbildungseinrichtung in eine Empfangslinie im Empfangsbereich abgebildet werden, und dass jeder Beleuchtungsfleck auf dem Objekt unter einem beliebigen Winkel zur optischen Achse der Abbildungseinrichtung in die Empfangslinie abgebildet wird, der mit dem Referenzwinkel in einer Empfangsebene liegt, wobei die Empfangslinie von der optischen Achse der Abbildungseinrichtung im Empfangsbereich geschnitten wird und die Empfangsebene von den Achsen der Abbildungslichtbündel im Empfangsbereich nach der Ablenkung aufgespannt wird, dass in der Empfangsebene aus dem Winkelabstand zwischen dem jeweiligen Winkel der Achse des jeweiligen Abbildungslichtbündels und dem Referenzwinkel die Abweichung der Koordinaten des zu vermessenden Objektes vom Referenzobjekt in Richtung der Achse des jeweiligen Beleuchtungslichtbündels bestimmt wird, und dass aus den Koordinaten des Referenzobjektes und der Abweichung der Koordinaten des Objektes vom Referenzobjekt die räumliche Lage der Beleuchtungsflecke auf dem zu vermessenden Objekt als Form des Objektes bestimmt wird.

2. Verfahren nach Anspruch 1, dadurch gekennzeichnet, dass die Empfangslinie so vorgesehen wird, dass die optische Achse der Abbildungseinrichtung im Empfangsbereich in einem Punkt S' geschnitten wird, in den ein Schnittpunkt S der Achse des jeweiligen Beleuchtungslichtbündels mit der optischen Achse der Abbildungseinrichtung vor der Ablenkung der Abbildungslichtbündel, abgebildet wird, und dass die Empfangslinie so gegen die optische Achse der Abbildungseinrichtung nach der Ablenkung geneigt ist, dass der Tangens des Neigungswinkels $\phi'$ (tan $\phi'$) multipliziert mit dem Abbildungsmassstab $\beta$ der Abbildungseinrichtung gleich dem Tangens des Winkels $\phi$ ist, unter dem sich das jeweilige Beleuchtungslichtbündel und die optische Achse der Abbildungseinrichtung im Objektbereich vor der Ablenkung schneiden, d.h. dass $\beta \cdot \tan \phi' = \tan \phi$ ist.

3. Verfahren nach Anspruch 1 oder 2, dadurch gekennzeichnet, dass die Beleuchtungslichtbündel und die zugeordneten Abbildungslichtbündel winkelstarr gekoppelt so abgelenkt werden, dass der Winkel zwischen den Achsen zweier beliebiger Beleuchtungslichtbündel und der Winkel zwischen den jeweiligen zugeordneten optischen Achsen der Abbildungseinrichtung im Objektbereich vor der Ablenkung der Abbildungslichtbündel gleich ist.

4. Verfahren nach einem der Ansprüche 1 bis 3, dadurch gekennzeichnet,

dass zur Erzeugung einer Folge von Beleuchtungsflecken auf dem zu vermessenden Objekt und zur Abbildung dieser Folge von Beleuchtungsflecken in den Empfangsbereich telezentrische Beleuchtungslichtbündel und Abbildungslichtbündel verwendet werden.

5. Verfahren nach einem der Ansprüche 1 bis 4, dadurch gekennzeichnet,

dass ein Beleuchtungslichtbündel mit einem ausgeprägten Intensitätsmaximum seiner Lichtverteilung längs seiner Lichtbündelachse verwendet wird.

6. Verfahren nach einem der Ansprüche 1 bis 5, dadurch gekennzeichnet,

dass ein Abbildungslichtbündel mit einem ausgeprägten Intensitätsmaximum seiner Lichtverteilung längs seiner Lichtbündelachse verwendet wird.

7. Vorrichtung zur mehrdimensionalen Vermessung eines Objektes, insbesondere zur Durchführung des Verfahrens nach einem der Ansprüche 1 bis 6,

mit einer Beleuchtungseinrichtung zur Erzeugung eines Beleuchtungslichtbündels (21), mit einer ersten Ablenkungseinrichtung (7; 24; 42) mindestens für das Beleuchtungslichtbündel zum Ablenken des Beleuchtungslichtbündels in vorgebbare Beleuchtungsrichtungen und zum Erzeugen einer Folge von Beleuchtungsflecken (29) auf dem zu vermessenden Objekt (27), mit einer Abbildungseinrichtung (43, 44) zur Abbildung der einzelnen Beleuchtungsflecke (29) mit einem Abbildungslichtbündel auf eine Empfängereinrichtung (13; 31) und

mit einer mindestens mit der ersten Ablenkungseinrichtung (7; 24; 42) und der Empfängereinrichtung (13; 31) verbundenen Auswerteeinrichtung (A), dadurch gekennzeichnet,

dass eine zweite Ablenkungseinrichtung (7; 24; 43) für das Abbildungslichtbündel vorgesehen ist, die mit der ersten Ablenkungseinrichtung (7; 24; 42) gekoppelt ist, dass die Empfängereinrichtung (13; 31) der zweiten Ablenkungseinrichtung (7; 24; 43) im Strahlengang des Abbildungslichtbündels nachgeschaltet ist und Empfängerelemente längs einer Linie aufweist, wobei die Linie einen Schnittpunkt (S') mit der optischen Achse (49) der Abbildungseinrichtung (43, 44) hat und in einer Ebene liegt, die nach der zweiten Ablenkungseinrichtung (7; 24, 43) von den Achsen der Abbildungslichtbündel von Beleuchtungsflecken aufgespannt ist,

dass die Kopplung der ersten und zweiten Ablenkungseinrichtung (7; 24, 42, 43) so ausgelegt ist, dass die Abbildung von Beleuchtungsflecken eines Referenzobjektes (10; 39; 50) auf die Linie der Empfängerelemente (13; 31) unter einem bestimmten Referenzwinkel zur optischen Achse (49) der Abbildungseinrichtung (43, 44) erfolgt und dass die Abbildung eines Beleuchtungsfleckes (29) auf dem zu vermessenden Objekt (27) auf die Linie der Empfängerelemente (13; 31) unter einem Winkel zur optischen Achse der Abbildungseinrichtung (43; 44) erfolgt, wobei aus dem jeweiligen Winkelabstand zum Referenzwinkel und der Richtung der Achse des jeweiligen Beleuchtungslichtbündels in der Auswerteeinrichtung (A) der Koordinatenabstand des Beleuchtungsfleckes (29) auf dem zu vermessenden Objekt (27) in Richtung der Achse des jeweiligen Beleuchtungslichtbündels (21) gegenüber dem Referenzobjekt (10; 39; 50) bestimmbar ist.

8. Vorrichtung nach Anspruch 7, dadurch gekennzeichnet, dass die Linie der Empfängerelemente (13; 31) die optische Achse (49) der Abbildungseinrichtung im Empfangsbereich in einem Punkt (S') schneidet, der durch Abbildung eines Schnittpunktes (S) der Achse des jeweiligen Beleuchtungslichtbündels (45) mit der jeweiligen optischen Achse (47) der im Strahlengang vor der zweiten Ablenkungseinrichtung (43) vorgesehenen Abbildungseinrichtung (43, 44) entsteht, und dass die Linie der Empfängerelemente (13; 31) gegen die optische Achse (49) der der zweiten Ablenkungseinrichtung (43) nachgeschalteten Abbildungseinrichtung so geneigt ist, dass der Tangens des Neigungswinkels $\phi'$ (tan $\phi'$) multipliziert mit dem Abbildungsmassstab $\beta$ der Abbildungseinrichtung (43, 44) gleich dem Tangens des Winkels $\phi$ ist, unter dem das jeweilige Beleuchtungslichtbündel (45) die jeweilige optische Ache (47) der Abbildungseinrichtung im Objektbereich schneidet, d.h. dass $\beta \cdot \tan \phi' = \tan \phi$ ist.

9. Vorrichtung nach Anspruch 8, dadurch gekennzeichnet, dass die Linie der Empfängerelemente (13; 31) geradlinig angeordnet ist.

10. Vorrichtung nach einem der Ansprüche 7 bis 9, dadurch gekennzeichnet, dass die Kopplung der ersten und der zweiten Ablenkungseinrichtung (7; 24; 42, 43) miteinander winkelstarr ausgebildet ist.

11. Vorrichtung nach Anspruch 10, dadurch gekennzeichnet, dass die erste und zweite Ablenkungseinrichtung als ein Ablenkspiegel (7; 24) mit gemeinsamer Drehachse ausgebildet sind.

12. Vorrichtung nach einem der Ansprüche 7 bis 11, dadurch gekennzeichnet, dass in den Strahlengang des Beleuchtungslichtbündels eine Einrichtung zur Schärfentiefenerweiterung, insbesondere ein Axicon (5; 23), eine Ringpupille oder eine Verschiebeeinrichtung zum schnellen Verschieben des Fokus des Beleuchtungslichtbündels längs der optischen Achse, zwischengeschaltet ist.

13. Vorrichtung nach einem der Ansprüche 7 bis 12, dadurch gekennzeichnet, dass in den Strahlengang des Abbildungslichtbündels eine Einrichtung zur Schärfentiefenerweiterung, insbesondere ein Axicon, eine Ringpupille oder eine Verschiebeeinrichtung zum schnellen Verschieben des Fokus des Abbildungslichtbündels längs der optischen Achse, zwischengeschaltet ist.

14. Vorrichtung nach einem der Ansprüche 7 bis 13, dadurch gekennzeichnet, dass zur Erzeugung telezentrischer Beleuchtungslichtbündel und telezentrischer Abbildungslichtbündel im Ob-

jektbereich eine optische Einrichtung (1, 2, 3, 4, 5, 6, 7, 8, 9; 9, 11, 7, 12) im Strahlengang zwischen den Ablenkungseinrichtungen (7) und dem zu vermessenden Objekt vorgesehen ist.

## Claims

1. Method for the multidimensional surveying of an object, in which the object is illuminated with an illumination light bundle, in which a sequence of illumination spots is produced on the object by deflecting the illumination light bundle in predeterminable illumination directions, in which the illumination spots are successively imaged by imaging light bundles in imaging directions differing from the illumination directions in a detection field and in which the position of the images of the illumination spot in the detection field is determined and from this and from the illumination direction, the spatial position of the illumination spot on the object to be surveyed is determined, characterized in that the illumination light bundle and the imaging light bundle used for imaging the illumination spot are deflected, that the deflection of the illumination light bundle and the imaging light bundle takes place in coupled manner in such a way that all the illumination spots are imaged on a predeterminable reference object under a given reference angle to the optical axis of the imaging means in a detection line in the detection field and that each illumination spot on the object is imaged under a random angle to the optical axis of the imaging means in the detection line and which is in detection plane with the reference angle, that the detection line is intersected by the optical axis of the imaging means in the detection field and that the detection plane is fixed by the axes of the imaging light bundles in the detection field following deflection, that in the detection plane the divergence of the coordinates of the object to be surveyed from the reference object in the direction of the axis of the particular illumination light bundle is determined from the angular spacing between the particular angle of the axis of the particular imaging light bundle and the reference angle and that the spatial position of the illumination spot on the object to be surveyed is determined as the object shape from the coordinates of the reference objects and the divergence of the object coordinates from the reference object.

2. Method according to claim 1, characterized in that the detection line is provided in such a way that the optical axis of the imaging means is intersected at a point S' in the detection field at which an intersection point S of the axis of the particular illumination light bundle is imaged with the optical axis of the imaging means prior to the deflection of the imaging light bundle and that the deflection line tilts in such a way with respect to the optical axis of the imaging means after deflection that the tangent of the slope angle φ' (tan φ') multiplied by the imaging scale β of the imaging means is the same as the tangent of the angle φ, under which the particular illumination light bundle and the optical axis of the imaging means intersect in the object field prior to deflection, i.e. β · tan φ' = tan φ.

3 A method according to claims 1 or 2, characterized in that the illumination light bundle and the associated imaging light bundle coupled in fixed angle manner are deflected in such a way that the angle between the axes of two random illumination light bundles and the angle between the particular associated optical axes of the imaging means in the object field before the deflection of the imaging light bundle are identical.

4. Method according to one of the claims 1 to 3, characterized in that for producing a sequence of illumination spots on the object to be surveyed and for imaging this sequence of illumination spots in the detection field, use is made of telecentric illumination light bundles and imaging light bundles.

5. Method according to one of the claims 1 to 4, characterized in that use is made of an illumination light bundle with a marked intensity maximum of its light distribution along its light bundle axis.

6. Method according to one of the claims 1 ot 5, characterised in that use is made of an imaging light bundle with a marked intensity maximum of its light distribution along its light bundle axis.

7. Apparatus for the multidimensional surveying of an object, particularly for performing the method according to one of the claims 1 to 6, with an illumination means for producing an illumination light bundle (21), with a first deflector (7; 24; 42) at least for the illumination light bundle or the purpose of deflecting the latter in predeterminable illumination directions and for producing a sequence of illumination spots (29) on the object (27) to be surveyed, with an image means (43, 44) for imaging the individual illumination spots (29) with an imaging light bundle onto a detector (13; 31) and with a plotting means (A) at least connected to the first deflector (7; 24; 42) and the detector (13; 31), characterized in that a second deflector (7; 24; 43) is provided for the imaging light bundle, which is coupled to the first deflector (7; 24; 42), that the detector (13; 31) of the second deflector (7; 24; 43) is connected downstream of the optical path of the imaging light bundle and the detector elements thereof are arranged along a line, the latter having an intersection point (S') with the optical axis (49) of the imaging means (43, 44) and is located in a plane which, following the second deflector (7; 24; 43), is fixed by the axes of the imaging light bundles of illumination spots, that the coupling of the first and second deflectors (7; 24; 42; 43) is such that the imaging of the illumination spots of a reference object (10; 39; 50) on the line of detector elements (13; 31) takes place under a given reference angle to the optical axis (49) of imaging means (43, 44) and that the imaging of an illumination spot (29) on the object (27) to be surveyed takes place on the line of detector elements (13; 31) at an angle to the optical axis of the imaging means (43; 44) the coordinate spacing of the illumination spot (29) on the object (27) to be surveyed in the direction of the axis of the particular illumination light bundle (21) with respect to the reference object (10;

39; 50) can be determined from the particular angular spacing relative to the reference angle and the direction of the axis of the particular illumination light bundle in the plotting means (A).

8. Apparatus according to claim 7, characterized in that the line of detector elements (13, 31) intersects the optical axis (49) of the imaging means at a point (S') in the detection field, said point resulting from the imaging of an intersection point (S) of the axis of the particular illumination light bundle (45) and the particular optical axis (47) of the imaging means (43, 44) provided in the optical path in front of the second deflector (43), that the line of detector elements (13, 31) tilts in such a way relative to the optical axis (49) of the imaging means following the second deflector (43) that the tangent of the tilt angle φ' (tan φ') multiplied by the image scale β of the imaging means (43, 44) is the same as the tangent of angle φ, under which the particular illumination light bundle (45) intersects the particular optical axis (47) of the imaging means in the object field, i.e. $\beta \cdot \tan \varphi' = \tan \varphi$.

9. Apparatus according to claim 8, characterized in that the line of detector elements (13; 31) is linear.

10. Apparatus according to one of the claims 7 to 9, characterized in that the coupling of the first and second deflectors (7; 24; 42, 43) is constructed in fixed angle manner.

11. Apparatus according to claim 10, characterized in that the first and second deflectors are constructed as a deflecting mirror (7; 24) with a common rotation axis.

12. Apparatus according to one of the claims 7 to 11, characterized in that in the optical path of the illumination light bundle is provided a device for the expansion of the depth of focus, particularly an axicon (5; 23), an annular pupil or a displacement means for the rapid displacement of the focus of the illumination light bundle along the optical axis.

13. Apparatus according to one of the claims 7 to 12, characterized in that in the optical path of the imaging light bundle is provided a device for expanding the depth of focus, particularly an axicon, an annular pupil or a displacement means for the rapid displacement of the focus of the imaging light bundle along the optical axis.

14. Apparatus according to one of the claims 7 to 13, characterized in that for producing telecentric illumination light bundles and telecentric imaging light bundles in the object field, an optical device (1, 2, 3, 4, 5, 6, 7, 8, 9; 9, 11, 7, 12) is provided in the optical path between the deflector (7) and the object to be measured.

## Revendications

1. Procédé de mesure pluridimensionnelle d'un objet selon lequel on éclaire l'objet à l'aide d'un faisceau lumineux d'éclairage,
selon lequel on dévie le faisceau lumineux d'éclairage suivant des directions d'éclairage prédéterminées, on génère une succession de taches d'éclairage sur l'objet, selon lequel les taches d'éclairage sont copiées successivement par un faisceau lumineux de copies dans une zone de réception suivant des directions de copie différentes des directions d'éclairage, et
selon lequel on détermine la position des copies des taches d'éclairage dans la zone de réception et on en détermine ainsi qu'à partir de la direction d'éclairage, la position dans l'espace des taches d'éclairage sur l'objet à mesurer,
caractérisé en ce que le faisceau lumineux d'éclairage et le faisceau lumineux de copies utilisés pour copier une tache d'éclairage sont déviés,
en ce que la déviation du faisceau lumineux d'éclairage et du faisceau lumineux de copies est couplée de sorte que toutes les taches d'éclairage puissent être copiées sur un objet de référence prédéterminable dans la zone de réception suivant une ligne de réception sous un angle de référence déterminé par rapport à l'axe optique de la direction de copies, et en ce que chaque tache d'éclairage sur l'objet est copiée sous un angle quelconque par rapport à l'axe optique de l'installation de copies dans la ligne de réception, et qui se situe dans un plan de réception avec l'angle de référence, la ligne de réception étant coupée dans la zone de réception par l'axe optique du dispositif de copies et le plan de réception passant par les axes des faisceaux lumineux de copie dans la zone de réception après la déviation, en ce que dans la zone de réception partant de l'intervalle angulaire entre l'angle respectif de l'axe du faisceau lumineux de copies correspondant et l'angle de référence, on détermine la déviation des coordonnées de l'objet à mesurer par rapport à l'objet de référence en direction de l'axe du faisceau lumineux d'éclairage correspondant, et
en ce que partant des coordonnées de l'objet de référence et de la déviation des coordonnées de l'objet par rapport à l'objet de référence, on détermine la position dans l'espace des taches d'éclairage sur l'objet à mesurer comme forme de l'objet.

2. Procédé selon la revendication 1, caractérisé en ce que la ligne de réception est prévue de manière que l'axe optique du dispositif de copies soit coupé en un point S' dans la zone de réception, avec un point de coupe S de l'axe du faisceau lumineux d'éclairage correspondant qui est copié avant la déviation du faisceau lumineux de copies et en ce que la ligne de réception est inclinée par rapport à l'axe optique du dispositif de copies après déviation, de façon que la tangente de l'angle d'inclinaison φ' (tg φ') multipliée par l'échelle de copies β du dispositif de copies soit égale à la tangente de l'angle φ suivant lequel le faisceau lumineux d'éclairage respectif et l'axe optique du dispositif de copies se coupent au niveau de l'objet avant la déviation c'est-à-dire β que multiplie tg φ' = tg φ.

3. Procédé selon la revendication 1 ou 2, caractérisé en ce que le faisceau lumineux d'éclairage et le faisceau lumineux de copies associés sont couplés avec un angle rigide en étant déviés de façon que l'angle entre les axes de deux faisceaux lumineux d'éclairage quelconques et l'angle entre les axes optiques associés, respectifs du dispositif de copies dans la zone de l'objet avant la déviation du faisceau lumineux de copies soient égaux.

4. Procédé selon l'une des revendications 1 à 3, caractérisé en ce que pour générer une suite de taches d'éclairage sur l'objet à mesurer et pour copier cette suite de taches d'éclairage dans la zone de réception, on utilise un faisceau lumineux d'éclairage télécentrique dans la zone de réception et un faisceau lumineux de copies.

5. Procédé selon l'une des revendications 1 à 4, caractérisé en ce qu'on utilise un faisceau lumineux d'éclairage ayant un maximum d'intensité prononcée de sa répartition de lumière le long de l'axe de son faisceau lumineux.

6. Procédé selon l'une des revendications 1 à 5, caractérisé en ce qu'on utilise un faisceau lumineux de copies ayant un maximum d'intensité prononcée de sa répartition lumineuse le long de son axe de son faisceau lumineux.

7. Dispositif de mesure pluridimensionnelle d'un objet notamment pour la mise en œuvre du procédé selon l'une des revendications 1 à 6 comportant un dispositif d'éclairage pour former un faisceau lumineux d'éclairage (21),
avec un premier dispositif de déviation (7, 24, 42) au moins pour le faisceau lumineux d'éclairage pour dévier le faisceau lumineux d'éclairage dans des directions d'éclairage prédéterminables et pour générer une suite de taches d'éclairage (29) sur l'objet (27) mesurer avec un dispositif de copies (43, 44) pour copier les différentes taches d'éclairage (29) par un faisceau lumineux de copies sur un dispositif de réception (13, 31) et
avec un dispositif d'exploitation A relié au moins au premier dispositif de déviation (7, 24, 42) et au dispositif de réception (13, 31), caractérisé par un second dispositif de déviation (7, 24, 43) pour le faisceau lumineux de copies, dispositif qui est couplé au premier dispositif de déviation (7, 24, 42),
en ce que le dispositif de réception (13, 31) du second dispositif de déviation (7, 24, 43) est monté en aval dans le chemin du faisceau lumineux de copies et comporte des éléments récepteurs le long d'une ligne, cette ligne ayant un point de coupe S' avec l'axe optique (49) du dispositif de copie (43, 44) et est située dans un plan qui après le deuxième dispositif de déviation (7, 24, 43) passe par les axes du faisceau lumineux des copies des tâches d'éclairage,
en ce que le couplage entre le premier et le second dispositif de déviation (7, 24, 42, 43) est tel que la copie de tache d'éclairage d'un objet de référence (10, 39, 50) se fasse suivant la ligne des éléments de réception (13, 31) sous un angle de référence prédéterminé par rapport à l'axe optique (49) du dispositif de copies (43, 44) et en ce que la copie d'une tache d'éclairage (29) sur l'objet à mesurer (27) sur la ligne des éléments récepteurs (13, 31) se fait suivant un angle par rapport à l'axe optique du dispositif de copies (43, 44), l'intervalle angulaire respectif par rapport à l'angle de référence et la direction de l'axe du faisceau lumineux d'éclairage, dans le dispositif d'exploitation (A) permet de déterminer la distance en coordonnées de la tache d'éclairage (29) sur l'objet à mesurer (27) dans la direction de l'axe du faisceau lumineux d'éclairage (21) correspondant par rapport à l'objet de référence (10, 39, 50).

8. Dispositif selon la revendication 7, caractérisé en ce que la ligne des éléments récepteurs (13, 31) coupe l'axe optique (49) du dispositif de copies dans la zone de réception en un point S' qui est formé par la copie d'un point de coupe S de l'axe du faisceau lumineux d'éclairage respectif (45) et de l'axe optique respectif (47) du dispositif de copies (43, 44) prévu dans le chemin des faisceaux en amont du second dispositif de déviation (43) et
en ce que la ligne des éléments récepteurs (13, 31) est inclinée par rapport à l'axe optique (49) du dispositif de copies en aval du second dispositif déflecteur (43) de façon que la tangente de l'angle d'inclinaison φ' (tg φ') multipliée par l'échelle de copies β du dispositif de copies (43, 44) soit égale à la tangente de l'angle φ suivant lequel le faisceau lumineux d'éclairage (45) respectif coupe l'axe optique correspondant (47) du dispositif de copies dans la zone de l'objet, c'est-à-dire β que multiplie tg φ' = tg φ.

9. Dispositif selon la revendication 8, caractérisé en ce que la ligne des éléments récepteurs (13, 31) est droite.

10. Dispositif selon l'une des revendications 7 à 9, caractérisé en ce que le couplage du premier et du second dispositif de déviation (7, 24, 42, 43) est rigide sur le plan angulaire.

11. Dispositif selon la revendication 10, caractérisé en ce que le premier et le second dispositif de déviation sont constitués par un miroir réfléchissant (7, 24) ayant un axe de rotation commun.

12. Dispositif selon l'une des revendications 7 à 11, caractérisé en ce que dans le chemin des faisceaux lumineux d'éclairage, il est prévu en position intermédiaire un dispositif pour augmenter la profondeur de champ notamment un axicon (5, 23), une pupille annulaire ou un dispositif de décalage pour décaler rapidement le foyer du faisceau lumineux d'éclairage le long de l'axe optique.

13. Dispositif selon l'une des revendications 7 à 12, caractérisé en ce que dans le chemin du faisceau lumineux de copies, il est prévu en particulier pour augmenter la profondeur de champ, notamment un axicon, une pupille annulaire ou un dispositif de coulissement pour faire coulisser rapidement le foyer du faisceau lumineux de copies le long de l'axe optique.

14. Dispositif selon l'une des revendications 7 à 13, caractérisé en ce que pour former le faisceau lumineux d'éclairage, centré et le faisceau lumineux de copies télécentré dans la zone de l'objectif, il est prévu un dispositif optique (1, 2, 3, 4, 5, 6, 7, 8, 9; 9, 11, 7, 12) dans le chemin du faisceau entre les dispositifs de déviation de faisceau (7) et l'objet à mesurer.

# FIG. 1

# FIG. 2

FIG. 3a

FIG. 3b

# FIG. 4